# EUROPÄISCHE PATENTSCHRIFT

(11) **EP 2 905 643 B1**
(45) Veröffentlichungstag und Bekanntmachung des Hinweises auf die Patenterteilung: **03.07.2019**
(21) Anmeldenummer: 14154043.5
(22) Anmeldetag: 05.02.2014
(51) Int. Cl.: G02B 7/00

(54) **Verfahreinrichtung für einen nichtlinearen Kristall oder für sättigbare Absorber und Verfahren zum Ermitteln der Schrittweite der Verfahreinrichtung**
Traversing device for a non-linear crystal or for saturatable absorber and method for determining the increments of the traversing device
Dispositif de déplacement pour un cristal non linéaire ou pour des absorbeurs pouvant être saturés et procédé de détermination du pas du dispositif de déplacement

(43) Veröffentlichungstag der Anmeldung: 12.08.2015
(73) Patentinhaber: TRUMPF Schweiz AG, 7214 Grüsch (CH)
(72) Erfinder: Ziolek, Carsten, Dr., 7212 Seewis Dorf (CH); Büche, Dirk, 7215 Fanas (CH); Hürlimann, Thomas, 7310 Bad Ragaz (CH); Sprecher, Erich, 8753 Mollis (CH); Willi, Nikolaus, 7000 Chur (CH)
(74) Vertreter: Kohler Schmid Möbus Patentanwälte

(56) Entgegenhaltungen:
- US-A- 3 902 084
- US-A1- 2005 231 075
- US-A1- 2009 224 718
- US-A1- 2010 117 565
- US-A1- 2010 148 629
- US-A1- 2012 200 240

## Beschreibung

Die Erfindung betrifft eine Vorrichtung zum zweidimensionalen Verfahren eines nichtlinearen Kristalls oder eines sättigbaren Absorbers gemäß Oberbegriff von Anspruch 1 und ein Verfahren zum Ermitteln der Schrittweite einer derartigen Verfahrvorrichtung.

Eine derartige Verfahrvorrichtung ist durch die US 2010/0148629 A1 bekannt geworden. Bei dieser bekannten Verfahrvorrichtung sind vier elektromagnetische Stellglieder in zwei Ebenen angeordnet, wobei die beiden Stellglieder der unteren Schicht eine Tischplatte in einer Richtung bewegen. An der Oberseite der Tischplatte der unteren Schicht sind die Stellglieder der oberen Schicht befestigt. Diese obere Schicht dient für eine Bewegung senkrecht zur Bewegung der unteren Schicht.

Bei der aus der US 6859335 B1 bekannten Verfahrvorrichtung werden zum Positionieren von optischen Elementen, insbesondere zum Positionieren von nichtlinearen Kristallen, so genannte Schrittmotoren eingesetzt. Bei derartigen Schrittmotoren handelt es sich um Synchronmotoren, bei denen der Rotor mittels eines gesteuerten und schrittweise rotierenden elektromagnetischen Feldes gedreht wird. Bei Schrittmotorantrieben kann zur hinreichend genauen Positionsbestimmung grundsätzlich die Anzahl der zurückgelegten Schritte des Schrittmotors gezählt werden. Schrittmotorantriebe haben den Nachteil, dass sie typischerweise eine große Anzahl mechanischer und auch elektronischer Bauteile umfassen, die ausgasen und somit zu einer Schädigung des nichtlinearen Kristalls beitragen können.

Aus der Dissertation "Miniaturisierte Positioniersysteme mit mehreren Freiheitsgraden auf der Basis monolithischer Strukturen" von Uwe Jungnickel (Fachbereich 18 Elektrotechnik und Informationstechnik der Technischen Universität Darmstadt) ist zur Positionsbestimmung ferner eine Verfahrvorrichtung bekannt geworden, deren Position mittels eines Hallsensors bestimmt werden kann.

Des Weiteren sind miniaturisierte Positioniersysteme bzw. miniaturisierte Verfahrvorrichtungen bekannt, deren Verstell- bzw. Verfahrbewegungen auf dem Antrieb von Piezoeinheiten bzw. Piezoantrieben basieren. Piezoeinheiten bewirken in der Regel einen schrittweisen Antrieb der bewegten Teile, wobei die Schrittweite vergleichsweise stark variieren kann, da sie kraftabhängig ist (beispielsweise führt die sich mit fortschreitendem Zeitablauf einstellende Degradation der Piezoelemente zu einer sich verändernden Schrittweite). Dies bewirkt eine Lageabhängigkeit (bespielsweise weicht die Schrittweite einer horizontal eingebauten Verfahrvorrichtung von der Schrittweite einer vertikal oder in einer schrägen Einbaulage eingebauten Verfahrvorrichtung ab). Die Kontrolle bzw. Überprüfung der genauen Position ist nur mit aufwändigen, teuren und empfindlichen Wegmesssystemen möglich. Bei sättigbaren Absorbern bestehen grundsätzlich dieselben Nachteile bzw. dieselben Problematiken.

Der vorliegenden Erfindung liegt die Aufgabe zugrunde, eine eingangs genannte Verfahrvorrichtung und ein Verfahren zum Ermitteln der Schrittweite einer derartigen Verfahrvorrichtung bereitzustellen, die die Nachteile des Standes der Technik überwinden. Insbesondere sollen eine Piezo-Verfahrvorrichtung und ein entsprechendes Verfahren bereitgestellt werden, die ohne ein aufwändiges Wegmesssystem ein genaues und zuverlässiges sowie einfaches und schnelles Positionieren bzw. eine genaue Schrittweitenbestimmung von nichtlinearen Kristallen oder sättigbaren Absorbern ermöglichen.

Diese Aufgabe wird erfindungsgemäß durch eine Verfahrvorrichtung mit den Merkmalen von Anspruch 1 gelöst.

Der mit der erfindungsgemäßen Verfahrvorrichtung verbundene Vorteil besteht im Wesentlichen darin, dass mittels der Verfahrvorrichtung eine einfache und schnelle Schrittweitenbestimmung ohne aufwändige Positionsmesssysteme möglich ist. Hierzu können beim Verfahren des Schlittens von der ersten in die zweite Endlage die zurückgelegten Schritte mittels der Zähleinrichtung gezählt werden. Durch ein Dividieren des vorbekannten Verfahrwegs durch die Anzahl der gezählten Schritte kann dann als Ergebnis der Division die Schrittweite ermittelt werden. Auf diese Weise kann die grundsätzlich kraft- und verschleißanfällige und damit auch lageabhängige Schrittweite von mittels Piezopositioniereinheiten bewegten Schlitten beispielsweise nach einem anwendungsbedingten Umbau der Verfahrvorrichtung in eine andere Maschine oder in eine andere Lage der gleichen Maschine in einfacher Weise bestimmt werden. Wenn die Schrittweite in einer entsprechenden Anwendungssituation ermittelt ist, kann die aktuelle Position des Schlittens durch Zählen der jeweils zurückgelegten Schritte errechnet werden. Die Bestimmung der Schrittweite kann je nach Anwendungsfall regelmäßig in vorbestimmten Zyklen oder bei Bedarf auch nur einzeln mittels der Verfahrvorrichtung durchgeführt werden. Die erfindungsgemäße Verfahrvorrichtung verzichtet weitestgehend auf aufwändige Positionsmesssysteme mit elektronischen Komponenten, sodass die Verfahrvorrichtung der Gefahr von Ausgasungen vorbeugt. Darüber hinaus lassen sich durch die Piezopositioniereinheiten vorteilhaft kleine Schrittweiten und somit eine sehr genaue Verfahrbarkeit des Schlittens bzw. des daran befestigten Kristalls erreichen.

Die Zähleinrichtung dient dem Zählen der beim Verfahren des Schlittens von der ersten in die zweite Endlage oder umgekehrt zurückgelegten Schritte. Die Anschläge können beispielsweise an dem Träger der Piezopositioniereinheit ausgebildet sein. Die Anschläge stellen ein Hindernis für den Schlitten dar, das die Verfahrbewegung des Schlittens in einer Verfahrrichtung an der entsprechenden Endlage stoppt. Die mindestens eine Piezopositioniereinheit umfasst den bezüglich des Trägers mittels des Piezoantriebs schrittweise von der ersten Endlage entlang des Verfahrwegs in die zweite Endlage und zurück verfahrbaren Schlitten. Der nichtlineare Kristall kann beispielsweise ein Kristall der Art LBO LiB3O5, BBO β-BaB₂O₄ und CLBO CsLiB6O10 sein. Aber auch andere nichtlineare Kristalle sind möglich. Die Größe bzw. Abmessungen der nichtlinearen Kristalle beträgt typischerweise 2 mm bis 4 mm. Die Schrittweite der Verfahrvorrichtung kann grundsätzlich von der Laserspotgröße abhängig sein und beträgt in der Regel zwischen 20 µm und 100 µm. Als sättigbare Absorber können beispielsweise so genannte SESAM's eingesetzt werden.

Durch das Kontaktelement ist eine klare und definierte Einnahme der Schlittenposition in den beiden Endlagen möglich. Das Kontaktelement kann austauschbar bzw. ersetzbar ausgeführt sein, um einem gegebenenfalls auftretenden Verschleiß beim Berühren der Anschläge zu begegnen.

Bevorzugt ist auch eine Ausführungsform, bei der die Verfahrvorrichtung eine Steuereinrichtung mit einer Auswerteeinheit zum Berechnen der Schrittweiten aus dem oder den Verfahrwegen und der Anzahl der gezählten Schritte umfasst. Die Auswerteeinheit kann signaltechnisch mit der oder den Zähleinrichtungen sowie mit den jeweils an den Anschlägen angeordneten Endlagendetektoren der einzelnen Piezopositioniereinheiten oder mit der Spannungseinrichtung zur Endlagendetektion verbunden sein. In der Auswerteeinheit sind ferner die Werte für den oder die vorbekannten Verfahrwege der einzelnen Piezopositioniereinheiten abgelegt bzw. gespeichert. Grundsätzlich ist es auch möglich, die Verfahrwege als Ergebnisse der Endlagenbestimmung in der Auswerteeinheit zu speichern. Somit kann die Auswerteeinheit die Signale der Endlagendetektoren sowie die Signale der Zähleinrichtungen erfassen und die Ermittlung der jeweiligen Schrittweiten durchführen. Die Endlagedetektoren können auch jeweils als Schaltelemente mit einem definierten Schaltpunkt ausgebildet sein.

Nach einer Ausführungsform ist zur Endlagendetektion eine elektrische Spannungseinrichtung vorgesehen. Die Spannungseinrichtung ist dazu ausgebildet, zwischen dem Schlitten und den Anschlägen ein elektrisches Potential aufzubauen. Somit kann, wenn der Schlitten die jeweilige Endlage einnimmt und dabei den entsprechenden Anschlag berührt, ein Stromkreis geschlossen und somit ein Detektionssignal übertragen werden (beispielsweise an die Auswerteeinheit). Hierzu können sowohl schlittenseitig als auch anschlagseitig elektrische Kontakte vorgesehen sein. Alternativ können zur Detektion der Endlagen des Schlittens auch an den Anschlägen angeordnete Endlagendetektoren vorgesehen sein. Diese können kraftausgelöste Schaltmittel, wie beispielsweise Kraftgeber, umfassen.

Die Aufgabe wird ferner erfindungsgemäß durch ein Verfahren zum Ermitteln der Schrittweite der erfindungsgemäßen Verfahrvorrichtung mit den Merkmalen von Anspruch 5 gelöst.

Durch das erfindungsgemäße Verfahren kann eine einfache und schnelle sowie genaue Schrittweitenbestimmung (bzw. Bestimmung der Auflösung) ohne ein aufwändiges Messen der aktuellen Position des Schlittens anhand von Messsystemen durchgeführt werden. Im Anschluss an die Schrittweitenermittlung ist eine Bestimmung der aktuellen Position des Schlittens durch Zählen der jeweils aus einer bekannten Referenzposition (beispielsweise einer der Endlagen) zurückgelegten Schritte möglich. Die Bestimmung der Schrittweite kann je nach Anwendungsfall regelmäßig in vorbestimmten Zyklen oder auch nur einzeln im Bedarfsfall durchgeführt werden. Der Schlitten wird in der Regel linear entlang des vorbekannten Verfahrwegs bewegt, wobei das schrittweise Verfahren mittels des Piezoantriebs erfolgt. Das Zählen der beim Verfahren des Schlittens von der ersten in die zweite Endlage (oder umgekehrt) durchgeführten Schritte erfolgt durch die Zähleinrichtung.

Bei einer bevorzugten Verfahrensvariante wird der Schlitten vor dem schrittweisen Verfahren an einem an der ersten Endlage angeordneten, ersten Anschlag positioniert, und der Schlitten wird entlang des Verfahrwegs bis an einen an der zweiten Endlage angeordneten, zweiten Anschlag verfahren. Durch die Anschläge ist eine klare und definierte Einnahme der Schlittenposition in den beiden Endlagen möglich. Ein entlang einer ersten Richtung in eine Endlage bewegter Schlitten kommt an der Endlage zum Stillstand und kann nur durch eine Bewegung in der bezüglich der ersten Richtung entgegengesetzten Richtung wieder aus der Endlage entfernt bzw. wegbewegt werden.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fig. 1: eine erfindungsgemäße Verfahrvorrichtung, in einer perspektivischen Ansicht;
- Fig. 2: ein schematisches Schaltbild einer mit der Verfahrvorrichtung elektrisch verbundenen Steuereinrichtung;
- Fig. 3: die Verfahrvorrichtung der Fig. 1 mit einem Kristallhalter;
- Fig. 4: die Verfahrvorrichtung der Fig. 1 mit in eine linke Endlage verfahrenem Schlitten;
- Fig. 5: die Verfahrvorrichtung der Fig. 1 mit in eine rechte Endlage verfahrenem Schlitten;
- Fig. 6: die Verfahrvorrichtung der Fig. 1 mit in eine obere Endlage verfahrenem Schlitten, und
- Fig. 7: die Verfahrvorrichtung der Fig. 1 mit in eine untere Endlage verfahrenem Schlitten.

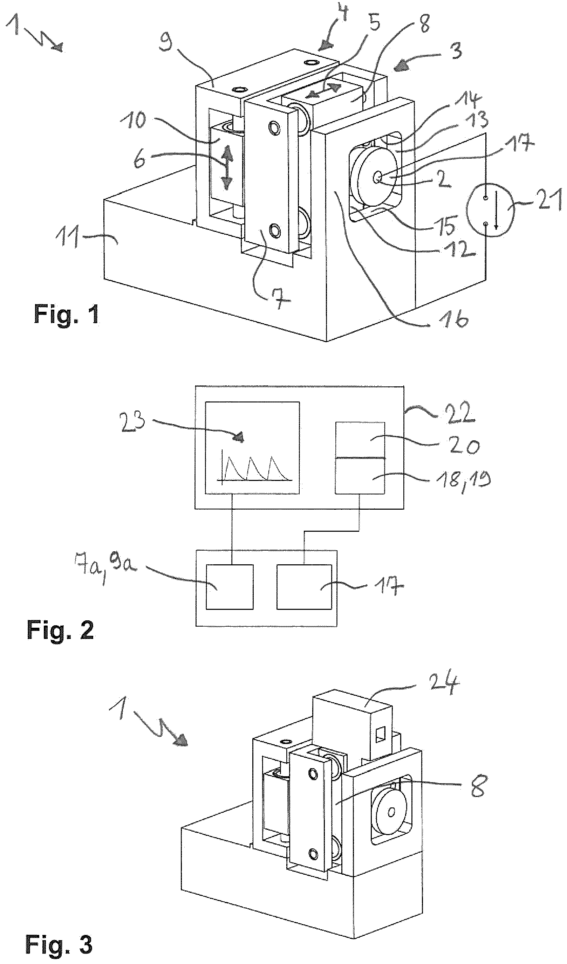

Die **Fign. 1** und **2** zeigen eine Verfahrvorrichtung **1** für einen nichtlinearen Kristall **2,** die eine erste und eine zweite Piezopositioniereinheit **3, 4** mit jeweils linearen und zueinander orthogonal angeordneten Verfahrwegen bzw. Verfahrrichtungen **5, 6** aufweist.

Die erste Piezopositioniereinheit 3 umfasst einen ersten Träger **7,** einen ersten Piezoantrieb **7a** sowie einen ersten Schlitten **8,** wobei der erste Schlitten 8 bezüglich des ersten Trägers 7 mittels des ersten Piezoantriebs 7a schrittweise in der ersten Verfahrrichtung 5 zwischen zwei Endlagen entlang des ersten Verfahrwegs verfahrbar ist. Die zweite Piezopositioniereinheit 4 umfasst einen zweiten Träger **9,** einen zweiten Piezoantrieb **9a** sowie einen zweiten Schlitten **10,** wobei der zweite Schlitten 10 bezüglich des zweiten Trägers 9 mittels des zweiten Piezoantriebs 9a schrittweise in der zweiten Verfahrrichtung 6 zwischen zwei Endlagen entlang des zweiten Verfahrwegs verfahrbar ist. Der zweite Träger 9 ist an einem Grundkörper **11** der Verfahrvorrichtung 1 befestigt.

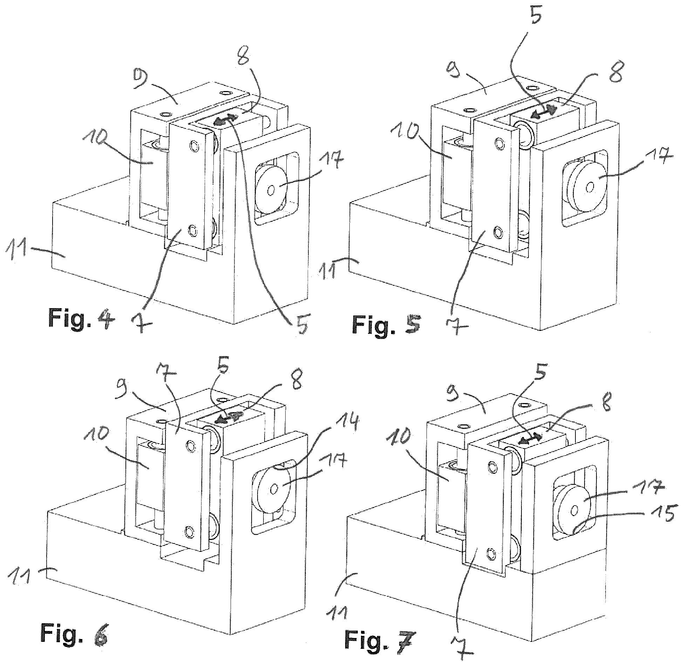

Der erste Träger 7 ist an dem zweiten Schlitten 10 befestigt, sodass der an dem ersten Schlitten 8 angeordnete Kristall 2 durch die Überlagerung der Verfahrbewegungen der beiden Schlitten 8, 10 in einer durch die beiden Verfahrrichtungen 5, 6 aufgespannten zweidimensionalen Ebene in unterschiedliche Positionen verfahren werden kann (vgl. die in den Fign. 4 bis 7 dargestellten und weiter unten beschriebenen Positionen bzw. Endlagen).

Die Verfahrvorrichtung 1 umfasst ferner für jede Piezopositioniereinheit 3,4 jeweils an deren beiden Endlagen angeordnete Anschläge **12, 13, 14, 15,** die gemeinsam einen als monolithischen Rahmen ausgebildetes Anschlagselement **16** bilden. Berührt ein an dem ersten Schlitten 8 ausgebildetes Kontaktelement **17** einen der Anschläge 12, 13, 14, 15 so kann durch eine Spannungseinrichtung **21** ein Stromkreis geschlossen und auf diese Weise ein Endlagen-Detektionssignal (ein Signal, dass das Kontaktelement 17 des ersten Schlittens 8 an einem der Anschläge 12, 13, 14, 15 das Anschlagselement 18 berührt) erzeugt werden. Die Spannungseinrichtung 21 legt zwischen dem Schlitten 8 und den Anschlägen 12, 13, 14, 15 bzw. zwischen dem Kontaktelement 17 und den Anschlägen 12, 13, 14, 15 ein elektrisches Potential an. Ob es sich bei einem Kontakt zwischen einem der Anschläge 12, 13, 14, 15 und dem Kontaktelement 17 des ersten Schlittens 8 um den linken oder rechten (oder oberen oder unteren) Anschlag 12, 13, 14, 15 handelt, kann dabei dadurch bestimmt werden, dass vorbekannt ist, in welcher Verfahrrichtung 5, 6 der erste Schlitten 8 jeweils zuvor bewegt wurde. Entsprechend wird auch nur der in dieser Verfahrrichtung 5, 6 angeordnete Anschlag 12, 13, 14, 15 detektiert, unabhängig davon, ob es sich aufgrund des einstückigen Anschlagelements 16 um das gleiche Detektionssignal handelt. Das Anschlagselement 16 bzw. der Rahmen mit den Anschlägen 12, 13, 14, 15 ist an dem Grundkörper 11 ausgebildet. Das Kontaktelement 17 und die beiden Piezopositioniereinheiten 3, 4 sind in der Fig. 1 in einer Mittelstellung dargestellt.

Die Verfahrvorrichtung 1 umfasst ferner eine Steuereinrichtung **22** mit einer ersten und einer zweiten Zähleinrichtung **18, 19** zum Zählen der beim Verfahren des ersten bzw. zweiten Schlittens 8, 10 jeweils zurückgelegten Schritte sowie eine Auswerteeinheit **20** zum Berechnen der Schrittweiten aus den Verfahrwegen und der Anzahl der gezählten Schritte. Mittels der Verfahrvorrichtung 1 ist eine einfache und schnelle sowie genaue Bestimmung der Schrittweiten der einzelnen Piezopositioniereinheiten 3, 4 ohne aufwändige Positionsmesssysteme möglich. Die Zähleinrichtungen 18, 19 sind in der Steuereinrichtung 22 angeordnet und zählen die Schritte der Schlitten 8,10 über eine Auswertung des Ansteuersignals **23.**

In der **Fig. 3** ist an dem Schlitten 8 der Verfahrvorrichtung 1 ein Kristallhalter 24 zur Halterung eines nichtlinearen (Laser-)Kristalls befestigt. Alternativ zu dem nichtlinearen Kristall 2 kann bei den Verfahrvorrichtungen 1 der Fign. 1 bis 7 auch ein sättigbarer Absorber, insbesondere ein SESAM, an dem Schlitten 8 angeordnet sein.

Das Verfahren zum Ermitteln der jeweiligen Schrittweiten wird im Folgenden mit Bezug zu den Fign. 4 bis 7 näher erläutert.

In den **Figuren 4 bis 7** ist der erste Schlitten 8 bzw. das Kontaktelement 17 des ersten Schlittens 8 in vier unterschiedlichen Endlagen dargestellt. Der erste Schlitten 8 ist dabei jeweils entsprechend bezüglich des ersten Trägers 7 und der zweite Schlitten 10 bezüglich dem zweiten Träger 9 bzw. dem Grundkörper 11 verfahren. Im Einzelnen zeigt Fig. 4 eine linke und Fig. 5 eine rechte sowie Fig. 6 eine obere und Fig. 7 eine untere Endlage bzw. Endlagenposition des ersten Schlittens 8 bzw. des daran ausgebildeten Kontaktelements 17.

Zum Ermitteln der Schrittweite des beispielsweise ersten Schlittens 8 in der ersten Verfahrrichtung 5 werden beim schrittweisen Verfahren des ersten Schlittens 8 von einer ersten, oberen Endlage (Fig. 6) in eine zweite, untere Endlage (Fig. 7) die zurückgelegten Schritte gezählt, und anschließend wird der vorbekannte und durch den Abstand der beiden Endlagen begrenzte Verfahrweg durch die Anzahl der gezählten Schritte dividiert, um als Ergebnis der Division die Schrittweite zu erhalten. Es versteht sich, dass in entsprechender Weise mit dem zweiten Schlitten 10 verfahren werden kann (Verfahren des zweiten Schlittens 10 von einer ersten, linken Endlage (Fig. 4) in eine zweite, rechte Endlage (Fig. 5) und Zählen der dabei zurückgelegten Schritte, um die Schrittweite des zweiten Schlittens 10 zu ermitteln). Um jeweils die gesamten ersten und zweiten Verfahrwege zum Zählen der jeweils erforderlichen Schritte abzufahren, wird (beispielhaft anhand des ersten Schlittens 8 dargestellt) der erste Schlitten 8 vor dem schrittweisen Verfahren an dem an der oberen Endlage angeordneten, einen Anschlag 14 positioniert (Fig.6) und anschließend vollständig entlang des linearen Verfahrwegs bis an den an der zweiten, unteren Endlage angeordneten, anderen Anschlag 15 verfahren. Dabei werden die beiden Endlagen des Schlittens 8 bzw. des Kontaktelements 17 mittels der an den Anschlägen 14, 15 vorgesehenen Endlagendetektoren detektiert.

Das Anschlagselement 16 bzw. der Rahmen kann die Verfahrwege der Schlitten 8,10 grundsätzlich so begrenzen, dass die Piezoantriebe 7a, 9a nicht bis in ihre jeweiligen Endpositionen ausgefahren werden, sondern dass ein Anhalten der jeweiligen Schlitten 8,10 bereits vorher an den Anschlägen 12, 13, 14, 15 des Anschlagselements 16 erfolgt. Durch eine derartige Begrenzung der Verfahrwege kann eine sichere Positionierung des nichtlinearen Kristalls 2 gewährleistet werden.

## Patentansprüche

1. Vorrichtung (1) zum zweidimensionalen Verfahren eines nichtlinearen Kristalls (2) oder eines sättigbaren Absorbers, aufweisend
eine erste und eine zweite Piezopositioniereinheit (3, 4) mit jeweils linearen und zueinander orthogonal angeordneten Verfahrwegen, die jeweils einen bezüglich eines Trägers (7, 9) mittels eines Piezoantriebs (7a, 9a) schrittweise zwischen einer ersten Endlage und einer zweiten Endlage entlang des Verfahrwegs verfahrbaren Schlitten (8, 10) aufweisen, wobei der nichtlineare Kristall (2) oder der sättigbare Absorber an dem Schlitten (8) der ersten Piezopositioniereinheit (3) befestigbar ist und der Träger (7) der ersten Piezopositioniereinheit (3) an dem Schlitten (10) der zweiten Piezopositioniereinheit (4) befestigt ist, und
jeweils die Endlagen definierende Anschläge (12, 13, 14, 15) für die Schlitten (8, 10),
**dadurch gekennzeichnet,**
**dass** sämtliche Anschläge (12, 13, 14, 15) durch ein einstückiges Anschlagselement (16) gebildet sind, welches über einen Grundkörper (11) ortsfest mit dem Träger (9) der zweiten Piezopositioniereinheit (4) verbunden ist,
**dass** der Schlitten (8) der ersten Piezopositioniereinheit (3) ein Kontaktelement (17) zum Berühren der Anschläge (12, 13, 14, 15) aufweist, und
**dass** eine Endlagendetektion zum Detektieren der Schlitten (8, 10) in ihren jeweiligen Endlagen und eine Zähleinrichtung (18, 19) zum Zählen der beim Verfahren der Schlitten (8, 10) jeweils zurückgelegten Schritte vorhanden sind.

2. Vorrichtung nach Anspruch 1, wobei das einstückige Anschlagselement (16) monolithisch ausgebildet ist.

3. Vorrichtung nach einem der vorhergehenden Ansprüche, wobei die Vorrichtung (1) eine Steuereinrichtung (22) mit einer Auswerteeinheit (20) zum Berechnen der Schrittweiten aus dem oder den Verfahrwegen und der Anzahl der gezählten Schritte umfasst.

4. Vorrichtung nach einem der vorhergehenden Ansprüche, wobei die Endlagendetektion eine elektrische Spannungseinrichtung (21) aufweist.

5. Verfahren zum Ermitteln der Schrittweite einer Vorrichtung (1) nach einem der vorhergehenden Ansprüche, bei dem:
- die Endlagen der Schlitten (8, 10) mittels einer zwischen dem Kontaktelement (17) und den Anschlägen (12, 14, 13, 15) wirkenden elektrischen Spannung detektiert werden,
- beim schrittweisen Verfahren der Schlitten (8, 10) von der ersten in die zweite Endlage die zurückgelegten Schritte gezählt werden, und
- der Verfahrweg durch die Anzahl der gezählten Schritte dividiert wird, wobei das Ergebnis der Division als ermittelte Schrittweite gilt.

6. Verfahren nach Anspruch 5, wobei die Schlitten (8, 10) vor dem schrittweisen Verfahren jeweils an dem Anschlag (12, 14) ihrer ersten Endlage positioniert und anschließend entlang des Verfahrwegs bis an den Anschlag (13, 15) ihrer zweiten Endlage verfahren werden.

## Claims

1. A device (1) for moving a nonlinear crystal (2) or a saturable absorber in two dimensions, comprising
a first and a second piezo positioning unit (3, 4) having in each case linear moving paths arranged orthogonally to one another, which units each have a carriage (8, 10) movable with respect to a carrier (7, 9) by means of a piezo drive (7a, 9a) step-by-step between a first end location and a second end location along the moving path, wherein the nonlinear crystal (2) or the saturable absorber is fastenable on the carriage (8) of the first piezo positioning unit (3) and the carrier (7) of the first piezo positioning unit (3) is fastened on the carriage (10) of the second piezo positioning unit (4), and stops (12, 13, 14, 15), which define the end locations in each case, for the carriages (8, 10),
**characterized in**
**that** all stops (12, 13, 14, 15) are formed by a one-piece stop element (16) which is non-displaceably connected to the carrier (9) of the second piezo positioning unit (4) via a basic body (11),
**that** the carrier (8) of the first piezo positioning unit (3) comprises a contact element (17) for contacting the stops (12, 13, 14, 15), and
**that** there are provided an end location detection for detecting the carriages (8, 10) in their respective end locations, and a counting unit (18, 19) for counting the steps covered during the moving of the carriage (8, 10) in each case.

2. The device as claimed in claim 1, wherein the one-piece stop element (16) is formed monolithically.

3. The device as claimed in any one of the preceding claims, wherein the device (1) comprises a control unit (22) having an analysis unit (20) for calculating the incremental steps from the moving path or paths and the number of the counted steps.

4. The device as claimed in any one of the preceding claims, wherein the end location detection has an electrical voltage unit (21).

5. A method for determining the incremental step of a device (1) as claimed in any one of the preceding claims, wherein:
- the end locations of the carriages (8, 10) are detected by means of an electrical voltage acting between the contact element (17) and the stops (12, 14, 13, 15),
- the steps covered are counted during the step-by-step moving of the carriage (8, 10) from the first end location into the second end location, and
- the moving path is divided by the number of the counted steps, wherein the result of the division is considered to be the determined incremental step.

6. The method as claimed in claim 5, wherein the carriages (8, 10) are each positioned at the stop (12, 14) of the first end location thereof before the step-by-step moving and are subsequently moved along the moving path up to the stop (13, 15) of the second end location thereof.

## Revendications

1. Dispositif (1) pour le déplacement bidimensionnel d'un cristal non linéaire (2) ou d'un absorbeur saturable, présentant
une première et une deuxième unité de positionnement piézoélectrique (3, 4) ayant des courses de déplacement linéaires respectives disposées orthogonalement l'une à l'autre et présentant chacune un chariot (8, 10) déplaçable pas à pas par rapport à un support (7, 9) entre une première position finale et une deuxième position finale le long de la course de déplacement au moyen d'un entraînement piézoélectrique (7a, 9a), le cristal non linéaire (2) ou l'absorbeur saturable pouvant être fixé sur le chariot (8) de la première unité de positionnement piézoélectrique (3) et le support (7) de la première unité de positionnement piézoélectrique (3) étant fixé sur le chariot (10) de la deuxième unité de positionnement piézoélectrique (4), et
des butées (12, 13, 14, 15) pour les chariots (8, 10) définissant respectivement les positions finales,
**caractérisé en ce**
**que** toutes les butées (12, 13, 14, 15) sont formées par un élément de butée d'une seule pièce (16) qui est relié de manière fixe au support (9) de la deuxième unité de positionnement piézoélectrique (4) par un corps de base (11), que le chariot (8) de la première unité de positionnement piézoélectrique (3) présente un élément de contact (17) destiné à toucher les butées (12, 13, 14, 15), et
**qu'**une détection de position finale pour détecter les chariots (8, 10) dans leurs positions finales respectives et un moyen de comptage (18, 19) pour compter les pas respectivement parcourus lors du déplacement des chariots (8, 10) sont prévus.

2. Dispositif selon la revendication 1, dans lequel l'élément de butée d'une seule pièce (16) est monolithique.

3. Dispositif selon l'une des revendications précédentes, dans lequel le dispositif (1) comprend un moyen de commande (22) avec une unité d'évaluation (20) pour calculer les largeurs de pas à partir de la ou des courses de déplacement et du nombre de pas comptés.

4. Dispositif selon l'une des revendications précédentes, dans lequel la détection de position finale présente un moyen de tension électrique (21).

5. Procédé de détermination de la largeur de pas d'un dispositif (1) selon l'une des revendications précédentes, dans lequel :
- les positions finales des chariots (8, 10) sont détectées au moyen d'une tension électrique agissant entre l'élément de contact (17) et les butées (12, 14, 13, 15),
- lors du déplacement pas à pas des chariots (8, 10) de la première à la deuxième position finale, les pas parcourus sont comptés, et
- la course de déplacement est divisée par le nombre de pas comptés, le résultat de la division étant considéré comme la largeur de pas déterminée.

6. Procédé selon la revendication 5, dans lequel les chariots (8, 10) sont chacun positionnés, avant le déplacement pas à pas, à la butée (12, 14) de leur première position finale et ensuite déplacés le long de la course de déplacement jusqu'à la butée (13, 15) de leur deuxième position finale.
